# EUROPEAN PATENT APPLICATION

(11) **EP 3 907 973 A1**
(43) Date of publication of application: **10.11.2021**
(21) Application number: 19908203.3
(22) Date of filing: 01.02.2019
(51) Int. Cl.: H04L 29/08, H04L 29/06

(54) **METHOD FOR ESTABLISHING COMMUNICATION CONNECTION AND PROXY SERVER**

(30) Priority: 08.01.2019 CN 201910017251
(71) Applicant: Wangsu Science & Technology Co., Ltd., Shanghai 200030 (CN)
(72) Inventor: ZHENG, Wenguang, Shanghai 200030 (CN); WANG, Wenbin, Shanghai 200030 (CN)
(74) Representative: De Arpe Tejero, Manuel
(86) International application number: PCT/CN2019/074464
(87) International publication number: WO 2020/143095

(57) **Abstract**

The present disclosure discloses a method and a proxy server for establishing a communication connection. The method includes: receiving a first connection request transmitted from a client, wherein the first connection request includes address information of a target server that the client needs to access; establishing a communication connection with the client in response to the first connection request, and parsing the address information from the first connection request; and constructing a second connection request directed to the target server according to the address information, and transmitting the second connection request to the target server to establish a communication connection with the target server. According to technical solutions provided by the present disclosure, the proxy server can be applied to TCP-based communication scenarios to realize the proxy of a TCP layer.

## Description

### TECHNICAL FIELD

The present disclosure relates to the field of Internet technology, and more particularly, to a method and a proxy server for establishing a communication connection.

### BACKGROUND

In the current Internet communication, a Transmission Control Protocol (TCP) connection may be established between a client and a server, and data interaction may be performed through the TCP connection. Specifically, the TCP connection may be established between the client and the server by transmitting handshake signals multiple times.

At present, the handshake signal transmitted from the client to the server generally carries an IP address and/or a port identifier of the client and an IP address and/or a port identifier of the server. The IP address and/or the port identifier of the client may be used as a source IP address and/or a source port identifier respectively, and the IP address and/or the port identifier of the server may be used as a destination IP address and/or a destination port identifier respectively.

After the TCP connection is established between the client and a proxy server, the proxy server doesn't know which target server the client actually wants to access, so access data transmitted from the client to the proxy server cannot be forwarded to the target server by the proxy server, which makes the proxy server less suitable for TCP-based communication scenarios.

### SUMMARY

An objective of the present disclosure is to provide a method and a proxy server for establishing a communication connection, such that a Multipath Transmission Control Protocol (MPTCP) at a client side is converted to a Transmission Control Protocol (TCP) suitable for a source station by the proxy server to implement the proxy of a TCP layer.

To achieve the above objective, in one aspect, the present disclosure provides a method for establishing a communication connection, which is applied to a proxy server. The method includes: receiving a first connection request transmitted from a client, wherein the first connection request includes address information of a target server that the client needs to access; establishing a communication connection with the client in response to the first connection request, and parsing the address information from the first connection request; and constructing a second connection request directed to the target server according to the address information, and transmitting the second connection request to the target server to establish a communication connection with the target server.

To achieve the above objective, in another aspect, the present disclosure also provides a proxy server. The proxy server includes: a connection request receiving unit, configured to receive a first connection request transmitted from a client, wherein the first connection request includes address information of a target server that the client needs to access; a connection establishing unit, configured to establish a communication connection with the client in response to the first connection request, and parse the address information from the first connection request; and a connection request transmitting unit, configured to construct a second connection request directed to the target server according to the address information, and transmit the second connection request to the target server to establish the communication connection with the target server.

To achieve the above objective, in still another aspect, the present disclosure also provides a proxy server, which includes a memory and a processor. The memory is configured to store a computer program, and when the computer program is executed by the processor, the above method for establishing a communication connection is implemented.

As can be seen from the above description, according to technical solutions provided by the present disclosure, when the client initiates a first connection request to the proxy server, address information of a target server that the client needs to access may be added into the first connection request. In this way, after receiving the first connection request, the proxy server may establish a communication connection with the client on the one hand, and may also parse the address information of the target server from the first connection request on the other hand. Then, the proxy server may initiate a second connection request to the target server according to the parsed address information, such that the proxy server may also establish a communication connection with the target server. In this way, only by transmitting to the proxy server, by the client, the first connection request carrying the address information of the target server, the communication connections can be established between the client and the proxy server, and between the proxy server and the target server. Subsequently, the client may perform data interaction with the target server through the proxy server. As can be seen from the above description, in the present disclosure, the address information of the target server that the client needs to access is carried in the connection request, such that a Multipath Transmission Control Protocol (MPTCP) at the client side is converted to a Transmission Control Protocol (TCP) suitable for a source station by the proxy server, which is suitable for TCP-based application scenarios, and thus facilitates the proxy services for the client normally.

### BRIEF DESCRIPTION OF THE DRAWINGS

To describe the technical solutions in the embodiments of the present disclosure more clearly, the accompanying drawings required for describing the embodiments will be briefly introduced below. Apparently, the accompanying drawings in the following description are merely some embodiments of the present disclosure. To those of ordinary skills in the art, other accompanying drawings may also be derived from these accompanying drawings without creative efforts.
FIG. 1 is a schematic diagram of a system architecture according to an embodiment of the present disclosure;
FIG. 2 is a flowchart of a method for establishing a communication connection according to an embodiment of the present disclosure;
FIG. 3 is a schematic diagram of a method for establishing a TCP communication connection according to an embodiment of the present disclosure;
FIG. 4 is a schematic diagram of a method for establishing an MPTCP communication connection according to an embodiment of the present disclosure; and
FIG. 5 is a schematic structural diagram of a proxy server according to an embodiment of the present disclosure.

### DETAILED DESCRIPTION

To make the objectives, technical solutions and advantages of the present disclosure clearer, the embodiments of the present disclosure are further described below in detail with reference to the accompanying drawings.

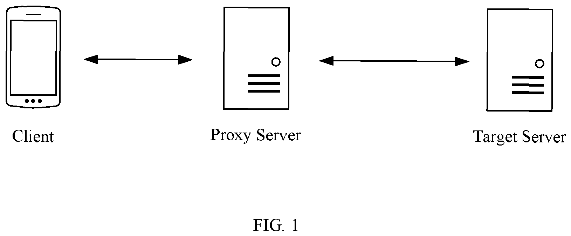

The present disclosure provides a method for establishing a communication connection, wherein the method may be applied to a system architecture as shown in FIG. 1. This system architecture may include a client, a proxy server, and a target server. The target server may be an actual server that the client needs to access, and the proxy server may be configured to forward data transmitted from the client or the target server. In the current TCP protocol, when a TCP communication connection is established between the client and the proxy server, a connection request may be transmitted to the proxy server, wherein the connection request may carry an IP address and/or a port identifier of the proxy server. In this way, the connection request may be transmitted to the proxy server, such that the TCP communication connection may be established between the client and the proxy server. However, in this case, the proxy server does not know that the client actually wants to access the target server, so when the client transmits data to the proxy server, the proxy server cannot forward the data to the target server normally.

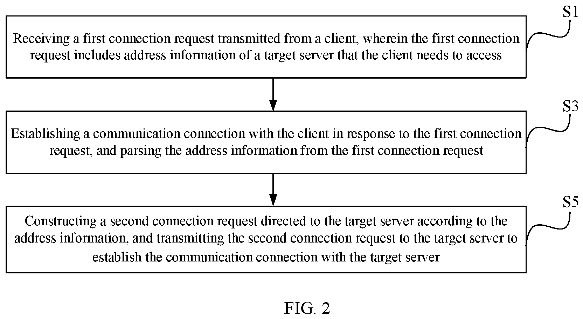

In view of this, the present disclosure provides a method for establishing a communication connection, and the execution subject of this method may be the above proxy server. With reference to FIG. 2, the method may include the following steps.

S1: receiving a first connection request transmitted from a client, wherein the first connection request includes address information of a target server that the client needs to access.

In this embodiment, an existing communication protocol between the client and the proxy server may be improved. In an original TCP protocol, a connection request transmitted from the client to the proxy server generally only contains address information of the proxy server, and the address information may include the IP address and/or port identifier of the proxy server. However, in this embodiment, the improved communication protocol may be applied to the client and the proxy server. When the client transmits the first connection request to the proxy server through the improved communication protocol, in addition to adding the address information of the proxy server into the first connection request according to the existing method, the address information of the target server that the client needs to access may also be added into the first connection request.

In practical applications, the first connection request transmitted from the client may be a SYNchronize sequence number (SYN) packet or other TCP packets. Taking the SYN packet as an example, the address information of the proxy server may be added according to a method stipulated in the existing TCP protocol. In addition, according to the improved communication protocol, the client may add, into an option field of the SYN packet, the address information of the target server that the client actually wants to access. The address information of the target server may include an IP address of the target server and/or a port identifier to be accessed on the target server. In this way, the address information of the target server may be filled in the designated option field of the first connection request. In practical applications, the designated option field may be an option field in the above SYN packet.

The proxy server obtains, from the first connection request transmitted from the client, the IP address and/or port identifier of the target server that the client needs to access, and then initiates a TCP connection to the target server. After the connection is established, the proxy server forwards the request received from the client to the target server, and then transmits a response of the target server to the client.

In one embodiment, when data interaction is performed between the client and the proxy server through the improved communication protocol, one designated port may also be selected from the proxy server, through which the first connection request transmitted from the client may be received. In this way, when the client starts a proxy service, the IP address of the proxy server and/or the port identifier of the designated port may be automatically configured in the client. When the client initiates the first connection request, the IP address of the proxy server and/or the port identifier of the designated port may be added into the first connection request. In this way, the proxy server may listen on the designated port, and receive, through the designated port, the first connection request transmitted from the client.

S3: establishing a communication connection with the client in response to the first connection request, and parsing the address information from the first connection request.

In this embodiment, after receiving the first connection request, the proxy server may establish the communication connection with the client in response to the first connection request. Specifically, the TCP communication connection may be established between the client and the proxy server through a three-way handshake.

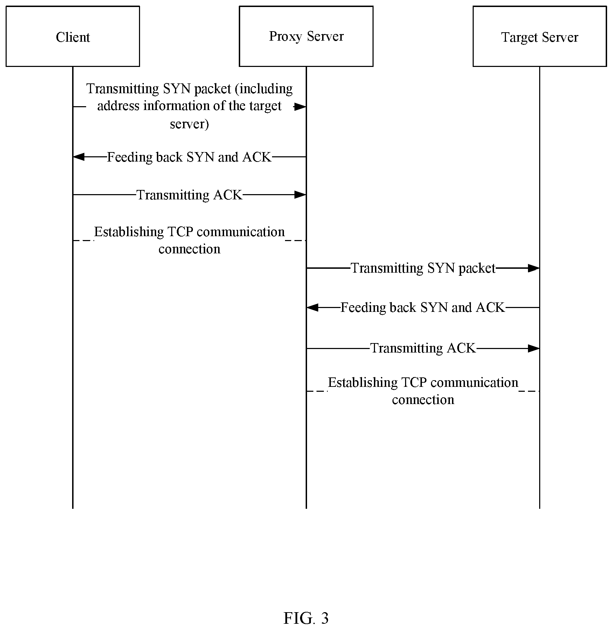

In this embodiment, the first connection request transmitted from the client to the proxy server may be the SYN packet into which the address information of the proxy server and the target server are added. The SYN packet may include a SYN created by the client. With reference to FIG. 3, after receiving the first connection request, the proxy server may identify the SYN from the first connection request, and may generate an ACKnowledgment sequence number (ACK) on the basis of the SYN In practical applications, a method for generating the ACK may be stipulated in the communication protocol in advance. For example, the ACK may be a numerical value obtained by plus one to the SYN. For example, if the SYN is 10, the ACK may be 11.

It should be noted that, in order to simplify the expression, in the drawings, the SYN may represent the SYNchronize sequence number, and the ACK may represent the ACKnowledgment sequence number. Of course, in the drawings, different SYNchronize sequence numbers may be represented by the SYN, and different ACKnowledgment sequence numbers may be represented by the ACK, which is just a simplified expression approach and does not mean that the SYN and the ACK transmitted between the clients or the proxy servers are the same.

After obtaining the ACK, the proxy server may generate a new SYN, and may construct a connection answer request including the ACK and the new SYN. The new SYN is different from the SYN created by the client and the ACK. After constructing the connection answer request, the proxy server may transmit the connection answer request to the client. After receiving the connection answer request, the client may extract the ACK and the new SYN from the connection answer request. The client may compare the ACK with the SYN created by the client itself. After acknowledging that the ACK and the SYN conform to a rule in the communication protocol, the client may determine that the current connection answer request is initiated by the proxy server in response to the first connection request. In this case, the client may continue to generate a new ACK on the basis of the new SYN according to a requirement in the communication protocol, and may feed back an acknowledgment packet containing the new ACK to the proxy server. In this way, after receiving the acknowledgment packet fed back by the client in response to the connection answer request, the proxy server may extract the new ACK from the acknowledgment packet. After determining that the new ACK and the new SYN generated by the proxy server itself meet the stipulations of the communication protocol, the proxy server may establish a TCP communication connection with the client.

In this embodiment, after establishing the communication connection with the client, the proxy server may further establish a communication connection with the target server. To establish the communication connection with the target server, the proxy server may first parse the address information of the target server from the first connection request. Specifically, the address information of the target server may be filled in a designated option field of the SYN packet, and then the proxy server may read, from the designated option field of the first connection request, the IP address of the target server and/or the port identifier to be accessed on the target server, so as to parse the address information of the target server.

In one embodiment, considering the TCP connection established between the client and the proxy server generally can only support one communication mode. For example, if the TCP connection is established between the client and the proxy server via WiFi, the TCP connection can only support the WiFi communication mode. Once network fluctuations occur in this communication mode, the data interaction between the client and the proxy server may also be affected. However, with the continuous development of terminal technology, generally there is more than one communication mode supported by the client. For example, a smart phone of a user can support two communication modes, such as WiFi and Long Term Evolution (LTE). Of course, the above WiFi and LTE are only two of a plurality of communication modes supported by the client. In practical applications, the client can also support more communication modes, which will not be enumerated here.

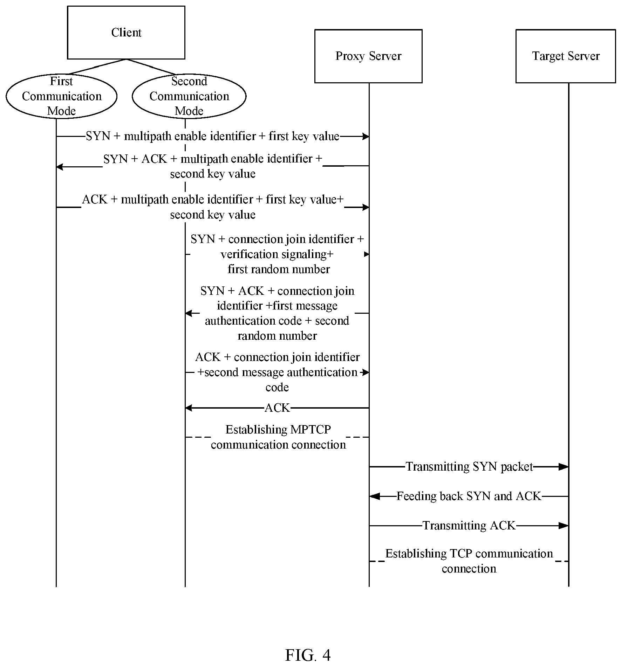

In this embodiment, to enable data interaction to be performed between the client and the proxy server through a plurality of communication modes, a MultiPath TCP (MPTCP) communication mode may be established between the client and the proxy server. Specifically, the MPTCP communication mode may be improved on the basis of the original TCP communication mode. For example, the client may support two communication modes, such as WiFi and 4G. When the MPTCP communication is established between the client and the proxy server, the WiFi and the 4G may serve as two subchannels, so as to establish a communication connection between the two subchannels. With reference to FIG. 4, when a communication connection of the first subchannel is established between the client and the proxy server through the first communication mode, the client may transmit a first connection request to the proxy server. In addition to the SYN added by the client, the first connection request may also include a multipath enabling identifier and a first key value added by the client. The multipath enable identifier may be MP_CAPABLE in the MPTCP, and the multipath enable identifier may indicate a MPTCP communication mode currently supported by the client. The first key value may be an attached numerical value key1 to improve data transmission security.

In this embodiment, after receiving the first connection request, the proxy server may identify the SYN from the first connection request, and may generate an ACKnowledgment sequence number (ACK) on the basis of the SYN according to an existing TCP protocol. Next, the proxy server may generate a new SYN and a second key value key2, and may construct a connection answer request containing the ACK, the new SYN, the multipath enable identifier, and the second key value. Then, the proxy server may transmit the connection answer request to the client. After receiving the connection answer request, the client finds that the connection answer request also carries the multipath enable identifier, which indicates that the proxy server also supports the MPTCP communication mode. In this way, the client may construct an acknowledgment packet in response to the connection answer request in accordance with the stipulations of the MPTCP protocol. The acknowledgment packet may include the multipath enable identifier, the first key value key1, the second key value key2, and a new ACK generated based on the new SYN. Then, the client may feed back the acknowledgment packet to the proxy server. After receiving the acknowledgment packet, the proxy server may extract the new ACK from the acknowledgment packet. After determining that the new ACK and the new SYN generated by the proxy server itself meet the stipulations of the communication protocol, the communication connection of the first subchannel corresponding to the first communication mode may be established between the proxy server and the client.

As can be seen from the above description, the communication connection of the first subchannel corresponding to the first communication mode may still be established between the client and the proxy server through a three-way handshake. However, in the three-way handshake, the multipath enable identifier, the first key value and the second key value need to be carried.

With reference to FIG. 4, a four-way handshake is needed when a communication connection of the second subchannel corresponding to the second communication mode is established between the client and the proxy server. Specifically, the client may transmit a third connection request to the proxy server through the second communication mode. The third connection request may include a connection join identifier since the communication connection of the second subchannel may be added on the basis of the communication connection of the first subchannel. The connection join identifier may be, for example, MP JOIN in the MPTCP. In addition, to indicate that the communication connection of the second subchannel and the communication connection of the first subchannel are in the same MPTCP communication connection, the third connection request may carry a verification signaling, which may be a hash value generated based on the second key value key2. In addition, according to the requirements of the MPTCP protocol, the third connection request may also include a first random number randomly generated by the client. Of course, in addition to the above-mentioned connection join identifier, the first random number and the verification signaling, the third connection request may also include a SYN according to an existing TCP communication mode.

After constructing the third connection request, the client may transmit the third connection request to the proxy server. The proxy server may identify the connection join identifier and the verification signaling from the third connection request. After acknowledging that the verification signaling is a hash value generated based on the second key value, the proxy server may know that the third connection request is initiated for the communication connection of the first subchannel. According to the requirements of the MPTCP protocol, the proxy server may generate a second random number and calculate a first message authentication code. Specifically, the proxy server may generate a first message according to the first random number and the second random number, and may generate a first secret key according to the first key value and the second key value, so as to calculate the first message authentication code corresponding to the first secret key and the first message. In practical applications, the proxy server may obtain the first message by splicing the first random number after the second random number, and may obtain the first secret key by splicing the first key value after the second key value. For example, if the first random number is 010 and the second random number is 111, the first message may be 111010. For another example, if the first key value is 101 and the second key value is 001, the first secret key may be 001101. The first message authentication code may be calculated by using the first secret key and the first message as parameters according to a Hashed Message Authentication Code (HMAC) calculation method.

In this embodiment, after calculating the first message authentication code, the proxy server may feed back to the client a connection answer packet including the connection join identifier, the first message authentication code, and the second random number. Of course, the connection answer packet may also include an ACK stipulated in a normal TCP protocol and a new SYN generated by the proxy server.

After receiving the connection answer packet, the client may generate a second message according to the first random number and the second random number, may generate a second secret key according to the first key value and the second key value, and may calculate a second message authentication code corresponding to the second secret key and the second message. Specifically, the client may obtain the second message by splicing the second random number after the first random number, and may obtain the second secret key by splicing the second key value after the first key value. For example, if the first random number is 010 and the second random number is 111, the second message may be 010111. For another example, if the first key value is 101 and the second key value is 001, the second secret key may be 101001. The second message authentication code may also be calculated by using the second secret key and the second message as parameters according to the HMAC calculation method.

After calculating the second message authentication code, the client may feed back to the proxy server an acknowledgment join request containing the connection join identifier and the second message authentication code. After receiving the acknowledgment join request, the proxy server may extract the second message authentication code. After the second message authentication code is successfully verified, the proxy server may feed back the acknowledgment connection packet to the client, such that the communication connection of the second subchannel corresponding to the second communication mode is established between the proxy server and the client. Of course, the client may still add a new ACK into the acknowledgment join request according to the stipulations of the TCP protocol. The new ACK may be generated based on the new SYN transmitted from the proxy server.

As can be seen from the above description, a TCP communication connection may be established between the client and the proxy server through a common TCP protocol. In addition, to improve data communication quality between the client and the proxy server, an MPTCP communication connection may also be established according to an MPTCP protocol. The MPTCP communication connection may include communication connections of a plurality of subchannels, and communication connections of different subchannels may correspond to different communication modes supported by the client.

S5: constructing a second connection request directed to the target server according to the address information, and transmitting the second connection request to the target server to establish the communication connection with the target server.

In this embodiment, after extracting the address information of the target server from the first connection request, the proxy server may establish a TCP connection with the target server according to a TCP communication mode. Specifically, with reference to FIG. 3 or FIG. 4, the proxy server may transmit a second connection request to the target server, wherein the second connection request may carry the SYN generated by the proxy server. After receiving the second connection request, the target server may generate an ACK on the basis of the SYN, and may generate a new SYN. Then, the target server may feed back to the proxy server a connection answer request including the ACK and the new SYN. In this way, after receiving the connection answer request fed back by the target server, the proxy server may generate a new ACK on the basis of the new SYN, and may establish the TCP communication connection with the target server after transmitting the acknowledgment packet containing the new ACK to the target server.

As can be seen from the above description, a TCP or MPTCP communication connection may be established between the client and the proxy server, and a TCP communication connection may be established between the proxy server and the target server. Then, for the TCP communication connection, the proxy server may receive an access packet transmitted from the client through the TCP communication connection established with the client, and may transmit the access packet to the target server through the TCP communication connection established with the target server. Moreover, the proxy server may receive a response packet fed back by the target server in response to the access packet, and may provide the response packet to the client through the TCP communication connection established with the client.

Furthermore, for the MPTCP communication connection, the proxy server may receive an access packet transmitted from the client through the first subchannel and/or the second subchannel, and may transmit the access packet to the target server through the TCP communication connection established with the target server. Then, the proxy server may receive a response packet fed back by the target server in response to the access packet, and may provide the response packet to the client through the first subchannel and/or the second subchannel.

The present disclosure also provides a proxy server, which includes:
a connection request receiving unit, configured to receive a first connection request transmitted from a client, wherein the first connection request includes address information of a target server that the client needs to access;
a connection establishing unit, configured to establish a communication connection with the client in response to the first connection request, and parse the address information from the first connection request; and
a connection request transmitting unit, configured to construct a second connection request directed to the target server according to the address information, and transmit the second connection request to the target server to establish the communication connection with the target server.

In one embodiment, the first connection request also includes a SYN added by the client, a multipath enable identifier, and a first key value. Correspondingly, the connection establishing unit includes:
a number processing module, configured to identify the SYN from the first connection request, and generate an ACK on the basis of the SYN;
a connection answer request constructing module, configured to generate a new SYN and a second key value, and to construct a connection answer request including the ACK, the new SYN, the multipath enable identifier, and the second key value; and
a first subchannel connecting module, configured to transmit the connection answer request to the client, and establish a communication connection of a first subchannel with the client after receiving an acknowledgment packet fed back by the client in response to the connection answer request, wherein the acknowledgment packet includes the multipath enable identifier, the first key value, the second key value, and a new ACK generated based on the new SYN

In one embodiment, the connection request receiving unit is also configured to receive a third connection request transmitted from the client, wherein the third connection request at least includes a connection join identifier, a first random number, and a verification signaling.

Correspondingly, the connection establishing unit also includes:
a first secret key generating module, configured to generate a second random number after acknowledging that the verification signaling is a hash value generated based on the second key value, and generate a first message according to the first random number and the second random number, and generate a first secret key according to the first key value and the second key value;
a connection answer packet feedback module, configured to calculate a first message authentication code corresponding to the first secret key and the first message, and feed back to the client a connection answer packet including the connection join identifier, the first message authentication code, and the second random number; and
a second subchannel connecting module, configured to receive an acknowledgment join request transmitted from the client in response to the connection answer packet, wherein the acknowledgment join request includes the connection join identifier and a second message authentication code, and to feed back an acknowledgment connection packet to the client to establish a communication connection of a second subchannel with the client after the second message authentication code is successfully verified.

In one embodiment, the proxy server also includes:
a multipath data transmitting unit, configured to receive an access packet transmitted from the client through the first subchannel and/or the second subchannel, and transmit the access packet to the target server through the communication connection established between the proxy server and the target server; and
a multipath data providing unit, configured to receive a response packet fed back by the target server in response to the access packet, and provide the response packet to the client through the first subchannel and/or the second subchannel.

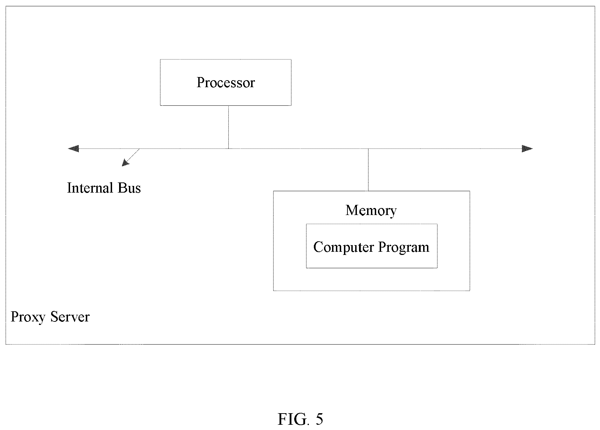

With reference to FIG. 5, the present disclosure also provides a proxy server, which includes a memory and a processor. The memory is configured to store a computer program, and when the computer program is executed by the processor, the above method for establishing a communication connection may be implemented. Specifically, as shown in FIG. 5, at a hardware level, the proxy server may include a processor, an internal bus, and a memory. The memory may include an internal storage and a non-volatile memory. The processor reads the corresponding computer program from the non-volatile memory into the internal storage and then runs. A person of ordinary skill in the art may understand that the structure as shown in FIG. 5 is only for illustration, and does not limit the structure of the above identification device. For example, the proxy server may further include more or less components than as shown in FIG. 5. For example, the proxy server may further include other processing hardware such as a graphics processing unit (GPU), or has a configuration different from as shown in FIG. 5. Of course, in addition to the software implementation, the present disclosure does not exclude other implementations, such as a logic device or a combination of hardware and software, and so on.

In this embodiment, the processor may include a central processing unit (CPU) or a graphics processing unit (GPU), or of course may also include other single-chip microcomputers, logic gate circuits, integrated circuits and so on with logic processing capabilities, or appropriate combinations thereof. The memory set forth in this embodiment may be a memory device for storing information. In a digital system, a device that can store binary data may be a memory. In an integrated circuit, a circuit with storage function that has no physical form may also be a memory, such as RAM, FIFO, etc. In a system, a storage device having a physical form may also be referred to as a memory and so on. When implemented, the memory may also be implemented in the form of cloud storage, and a specific implementation is not limited in this specification.

It should be noted that reference may be made to the description of the method embodiments for the specific embodiments of the proxy server in this specification, and thus repeated description is omitted herein.

As can be seen from the above description, according to technical solutions provided by the present disclosure, when the client initiates a first connection request to the proxy server, address information of a target server that the client needs to access may be added into the first connection request. In this way, after receiving the first connection request, the proxy server may establish a communication connection with the client on the one hand, and may also parse the address information of the target server from the first connection request on the other hand. Then, the proxy server may initiate a second connection request to the target server according to the parsed address information, such that a communication connection may also be established between the proxy server and the target server. In this way, only by transmitting to the proxy server, by the client, the first connection request carrying the address information of the target server, the communication connections can be established between the client and the proxy server, and between the proxy server and the target server. Subsequently, the client may perform data interaction with the target server through the proxy server. As can be seen from the above description, in the present disclosure, the address information of the target server that the client needs to access is carried in the connection request, such that a Multipath Transmission Control Protocol (MPTCP) at the client side is converted to a Transmission Control Protocol (TCP) suitable for a source station by the proxy server, which is suitable for TCP-based application scenarios, and thus facilitates the proxy services for the client normally.

From the description of the foregoing embodiments, those skilled in the art may clearly know that various embodiments may be implemented in the form of software with necessary general hardware platform, or in the form of hardware. Based on such an understanding, the above technical solutions in essence or that part of contribution to the prior art may be embodied in the form of software products, which may be stored in computer-readable storage media, such as a ROM/RAM, a diskette or an optical disk and the like, including some instructions to direct a computing device (may be a personal computer, a server, or a network device, etc.) to implement each embodiment or methods described in some parts of the embodiments.

The foregoing descriptions are merely preferred embodiments of the present disclosure, and are not intended to limit the present disclosure. Any modification, equivalent replacement and improvement made within the spirit and principle of the present disclosure shall fall into the protection scope of the present disclosure.

## Claims

1. A method for establishing a communication connection, wherein the method is applied to a proxy server, the method comprising:
receiving a first connection request transmitted from a client, wherein the first connection request comprises address information of a target server that the client needs to access;
establishing a communication connection with the client in response to the first connection request, and parsing the address information from the first connection request; and
constructing a second connection request directed to the target server according to the address information, and transmitting the second connection request to the target server to establish a communication connection with the target server.

2. The method according to claim 1, wherein the address information of the target server is filled in a designated option field of the first connection request, and the address information comprises an IP address of the target server and/or a port identifier to be accessed on the target server; and
correspondingly, the parsing the address information from the first connection request comprises:
reading, from the designated option field of the first connection request, the IP address of the target server and/or the port identifier to be accessed on the target server.

3. The method according to claim 1 or 2, wherein the first connection request further comprises a SYNchronize sequence number (SYN) created by the client; and correspondingly, establishing a communication connection with the client comprises:
identifying the SYN from the first connection request, and generating an ACKnowledgment sequence number (ACK) on the basis of the SYN;
generating a new SYN, and constructing a connection answer request comprising the ACK and the new SYN; and
transmitting the connection answer request to the client, and establishing the communication connection with the client after receiving an acknowledgment packet fed back by the client in response to the connection answer request, wherein the acknowledgment packet comprises a new ACK generated based on the new SYN

4. The method according to claim 3, wherein after establishing the communication connection with the target server, the method further comprises:
receiving an access packet transmitted from the client through the communication connection established with the client, and transmitting the access packet to the target server through the communication connection established with the target server; and
receiving a response packet fed back by the target server in response to the access packet, and providing the response packet to the client through the communication connection established with the client.

5. The method according to claim 1, wherein the first connection request further comprises a SYN added by the client, a multipath enable identifier, and a first key value; and correspondingly, the establishing a communication connection with the client comprises:
identifying the SYN from the first connection request, and generating an ACK on the basis of the SYN;
generating a new SYN and a second key value, and constructing a connection answer request comprising the ACK, the new SYN, the multipath enable identifier, and the second key value; and
transmitting the connection answer request to the client, and establishing a communication connection of a first subchannel with the client after receiving an acknowledgment packet fed back by the client in response to the connection answer request, wherein the acknowledgment packet comprises the multipath enable identifier, the first key value, the second key value, and a new ACK generated based on the new SYN

6. The method according to claim 5, wherein after establishing the communication connection with the client, the method further comprises:
receiving a third connection request transmitted from the client, wherein the third connection request at least comprises a connection join identifier, a first random number, and a verification signaling;
generating a second random number after acknowledging that the verification signaling is a hash value generated based on the second key value, generating a first message according to the first random number and the second random number, and generating a first secret key according to the first key value and the second key value;
calculating a first message authentication code corresponding to the first secret key and the first message, and feeding back to the client a connection answer packet comprising the connection join identifier, the first message authentication code, and the second random number; and
receiving an acknowledgment join request transmitted from the client in response to the connection answer packet, wherein the acknowledgment join request comprises the connection join identifier and a second message authentication code, and feeding back an acknowledgment connection packet to the client to establish a communication connection of a second subchannel with the client after the second message authentication code is successfully verified.

7. The method according to claim 6, wherein the generating a first message according to the first random number and the second random number comprises:
obtaining the first message by splicing the first random number after the second random number; and
the generating a first secret key according to the first key value and the second key value comprises:
obtaining the first secret key by splicing the first key value after the second key value.

8. The method according to claim 6, wherein the second message authentication code is generated by the client by means of:
generating, by the client, a second message according to the first random number and the second random number, and generating a second secret key according to the first key value and the second key value; and
calculating, by the client, the second message authentication code corresponding to the second secret key and the second message;
wherein the generating a second message according to the first random number and the second random number comprises:
obtaining the second message by splicing the second random number after the first random number;
wherein the generating a second secret key according to the first key value and the second key value comprises:
obtaining the second secret key by splicing the second key value after the first key value.

9. The method according to claim 6, wherein after establishing the communication connection with the target server, the method further comprises:
receiving an access packet transmitted from the client through the first subchannel and/or the second subchannel, and transmitting the access packet to the target server through the communication connection established with the target server; and
receiving a response packet fed back by the target server in response to the access packet, and providing the response packet to the client through the first subchannel and/or the second subchannel.

10. The method according to claim 1, wherein the first connection request further comprises an IP address of the proxy server and/or a port identifier of the proxy server; and
correspondingly, the proxy server receives the first connection request through a port corresponding to the port identifier.

11. The method according to claim 1, wherein the second connection request comprises a SYN; and
correspondingly, after transmitting the second connection request to the target server, the method further comprises:
receiving a connection answer request fed back by the target server, wherein the connection answer request comprises an ACK generated by the target server on the basis of the SYN and a new SYN generated by the target server; and
generating a new ACK on the basis of the new SYN, and establishing the communication connection with the target server after transmitting an acknowledgment packet comprising the new ACK to the target server.

12. A proxy server, comprising:
a connection request receiving unit, configured to receive a first connection request transmitted from a client, wherein the first connection request comprises address information of a target server that the client needs to access;
a connection establishing unit, configured to establish a communication connection with the client in response to the first connection request, and parse the address information from the first connection request; and
a connection request transmitting unit, configured to construct a second connection request directed to the target server according to the address information, and transmit the second connection request to the target server to establish the communication connection with the target server.

13. The proxy server according to claim 12, wherein the first connection request further comprises a SYN added by the client, a multipath enable identifier, and a first key value; and correspondingly, the connection establishing unit comprises:
a number processing module, configured to identify the SYN from the first connection request, and generate an ACK on the basis of the SYN;
a connection answer request constructing module, configured to generate a new SYN and a second key value, and construct a connection answer request comprising the ACK, the new SYN, the multipath enable identifier, and the second key value; and
a first subchannel connecting module, configured to transmit the connection answer request to the client, and establish a communication connection of a first subchannel with the client after receiving an acknowledgment packet fed back by the client in response to the connection answer request, wherein the acknowledgment packet comprises the multipath enable identifier, the first key value, the second key value, and a new ACK generated based on the new SYN

14. The proxy server according to claim 13, wherein the connection request receiving unit is further configured to receive a third connection request transmitted from the client, wherein the third connection request at least comprises a connection join identifier, a first random number, and a verification signaling; and
correspondingly, the connection establishing unit further comprises:
a first secret key generating module, configured to generate a second random number after acknowledging that the verification signaling is a hash value generated based on the second key value, generate a first message according to the first random number and the second random number, and generate a first secret key according to the first key value and the second key value;
a connection answer packet feedback module, configured to calculate a first message authentication code corresponding to the first secret key and the first message, and feed back to the client a connection answer packet comprising the connection join identifier, the first message authentication code, and the second random number; and
a second subchannel connecting module, configured to receive an acknowledgment join request transmitted from the client in response to the connection answer packet, wherein the acknowledgment join request comprises the connection join identifier and a second message authentication code, and to feed back an acknowledgment connection packet to the client to establish a communication connection of a second subchannel with the client after the second message authentication code is successfully verified.

15. The proxy server according to claim 14, further comprising:
a multipath data transmitting unit, configured to receive an access packet transmitted from the client through the first subchannel and/or the second subchannel, and transmit the access packet to the target server through the communication connection established with the target server; and
a multipath data providing unit, configured to receive a response packet fed back by the target server in response to the access packet, and provide the response packet to the client through the first subchannel and/or the second subchannel.

16. A proxy server, comprising a memory and a processor, wherein the memory is configured to store a computer program, and when the computer program is executed by the processor, the method according to any one of claims 1 to 11 is implemented.
